# EUROPEAN PATENT SPECIFICATION

(11) **EP 4 508 907 B1**
(45) Date of publication and mention of the grant of the patent: **15.07.2026**
(21) Application number: 23873155.8
(22) Date of filing: 26.09.2023
(51) Int. Cl.: H04W 48/18, H04W 60/00, H04W 76/10, H04W 8/20, H04W 60/04, H04W 8/18, H04W 36/14, H04W 88/14

(54) **METHOD AND APPARATUS FOR MULTI-MODALITY SERVICE IN WIRELESS COMMUNICATION SYSTEM**
VERFAHREN UND VORRICHTUNG FÜR MULTIMODALEN DIENST IN EINEM DRAHTLOSEN KOMMUNIKATIONSSYSTEM
PROCÉDÉ ET APPAREIL DE SERVICE MULTIMODALITÉ DANS UN SYSTÈME DE COMMUNICATION SANS FIL

(30) Priority: 29.09.2022 KR 20220124206
(43) Date of publication of application: 19.02.2025
(73) Proprietor: Samsung Electronics Co., Ltd., Suwon-si, Gyeonggi-do 16677 (KR)
(72) Inventor: BAEK, Youngkyo, Suwon-si Gyeonggi-do 16677 (KR)
(74) Representative: HGF
(86) International application number: PCT/KR2023/014915
(87) International publication number: WO 2024/072044

(56) References cited:
- EP-A1- 3 989 637
- CN-A- 113 747 510
- US-A1- 2019 380 104
- US-A1- 2020 053 636
- US-A1- 2020 053 636
- US-A1- 2020 112 907
- US-A1- 2020 228 936
- "3rd Generation Partnership Project; Technical Specification Group Core Network and Terminals; 5G System; Unified Data Management Services; Stage 3 (Release 17)", 3GPP STANDARD; TECHNICAL SPECIFICATION; 3GPP TS 29.503, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG4, no. V17.8.0, 23 September 2022 (2022-09-23), Mobile Competence Centre ; 650, route des Lucioles ; F-06921 Sophia-Antipolis Cedex ; France, pages 1 - 519, XP052211056
- "3rd Generation Partnership Project; Technical Specification Group Services and System Aspects; System architecture for the 5G System (5GS); Stage 2 (Release 17)", 3GPP STANDARD; 3GPP TS 23.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V17.6.0, 22 September 2022 (2022-09-22), Mobile Competence Centre ; 650, route des Lucioles ; F-06921 Sophia-Antipolis Cedex ; France, pages 1 - 571, XP052210897

## Description

### Technical Field

The disclosure relates to communication methods and apparatuses for a multi-modality service in a wireless communication system and, more particularly, to a method and apparatus for selecting a network function (NF) for a multi-modality service.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Intemet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Leaming (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM

(Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

The above information is presented as background information only to assist with an understanding of the disclosure. No determination has been made, and no assertion is made, as to whether any of the above might be applicable as prior art with regard to the disclosure.
EP 3989637A1 discloses, according to its abstract, a method and device for controlling the rate of data transmitted/received by a terminal in a wireless communication system.

### Disclosure of Invention

### Solution to Problem

The scope of the present invention is determined according to the independent claims. Various embodiments of the present invention are outlined in the dependent claims.

### Brief Description of Drawings

The above and other aspects, features, and advantages of certain embodiments of the disclosure will be more apparent from the following description taken in conjunction with the accompanying drawings, in which:
FIG. 1 is a diagram illustrating a transmission path of multi-modality service data in a wireless communication system
FIG. 2 is a flowchart illustrating a process of applying a quality of service (QoS) and policy for multi-modality to a protocol data unit (PDU) session for a multi-modality service in a wireless communication system
FIG. 3 is a flowchart illustrating a method of selecting an SMF in which a PDU session of each terminal for one multi-modality service is the same in a wireless communication system
FIG. 4 is a flowchart illustrating a method of selecting an SMF in which a PDU session of each terminal for one multi-modality service is the same in a wireless communication system
FIG. 5 is a flowchart illustrating a method of selecting an SMF in which a PDU session of each terminal for one multi-modality service is the same in a wireless **communication system**
FIG. 6 is a diagram illustrating a configuration of a terminal
FIG. 7 is a diagram illustrating a configuration of a network entity

### Best Mode for Carrying out the Invention

Hereinafter, the operation principle of the disclosure will be described in detail with reference to the accompanying drawings. In the following description of the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Furthermore, the size of each element does not completely reflect the actual size. In the drawings, identical or corresponding elements are provided with identical reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference numerals designate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the "unit" refers to a software element or a hardware element, such as a Field Programmable Gate Array (FPGA) or an Application Specific Integrated Circuit (ASIC), which performs a predetermined function. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" or may be implemented to reproduce one or more CPUs within a device or a security multimedia card. Furthermore, the "unit" in the embodiments may include one or more processors.

In the disclosure, a user equipment (UE) may be referred to as a terminal, a mobile station (MS), a cellular phone, a smartphone, a computer, or various types of electronic devices capable of performing communication functions. Also, a base station is an entity that allocates resources to terminals, and may be at least one of a gNode B, an eNode B, a Node B, a base station (BS), a wireless access unit, a base station controller, and a node on a network. Of course, the base station and the terminal are not limited to the above exmaples.

In the disclosure, a "downlink (DL)" refers to a radio link via which a base station transmits a signal to a terminal, and an "uplink (UL)" refers to a radio link via which a terminal transmits a signal to a base station.

Furthermore, the embodiments of the disclosure as described below may be applied to other communication systems having similar backgrounds or channel types to the embodiments of the disclosure.

The following detailed description of embodiments of the disclosure is directed to communication systems using various wired or wireless communication systems, for example, New RAN (NR) as a radio access network and Packet Core as a core network (5G system, 5G Core Network, or new generation core (NG Core)) which are specified in the 5G mobile communication standards defined by the 3rd generation partnership project long term evolution (3GPP LTE) that is a mobile communication standardization group. In addition, based on determinations by those skilled in the art, the disclosure may be applied to other communication systems having similar backgrounds or channel types through some modifications without significantly departing from the scope of the disclosure.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as used below, and other terms referring to subjects having equivalent technical meanings may be used.

In a 5G system, network slices are supported, allowing traffic for different network slices to be processed by different protocol data unit (PDU) sessions. The PDU sessions may refer to associations between a data network providing a PDU connectivity service and a terminal. The network slices may be understood as a technique for logically configuring a network using a set of network functions (NFs) and separating different network slices from each other to support various services with different characteristics, such as broadband communication services, mission critical services such as V2X, massive IoT, etc. Accordingly, even if there is a communication failure in one network slice, it does not affect the communication of other network slices, thereby providing a stable communication service. In this disclosure, the term "slice" may be used interchangeably with "network slice". In such a network environment, when a terminal receives various services, the terminal can connect to multiple network slices. The NF may be implemented as a network element as a software instance driven on hardware or as a virtualized function instantiated on an appropriate platform.

Mobile network operators may configure network slices and allocate network resources suitable for specific services for each network slice or set of network slices. The network resources may refer to NFs, logical resources provided by NFs, or wireless resource allocation by base stations.

For example, a mobile communication operator may configure network slice A to provide mobile broadband service, network slice B to provide vehicle communication service, and network slice C to provide XR service, which will be described later. That is, in the 5G network, the corresponding service can be efficiently provided to the terminal through a network slice specialized for each service characteristic. In the 5G system, the network slice can be identified as single-network slice selection assistance information (S-NSSAI). The S-NSSAI may include a slice/service type (SST) value and a slice differentiator (SD) value. The SST may indicate characteristics of a service supported by the network slice (e.g., enhanced mobile broadband {eMBB}, IoT, ultra-reliable low latency communication {URLLC}, V2X, XR service, etc.). The SD may be a value used as an additional identifier for a specific service referred to as SST.

Services that require high data rate and low latency (HDRLL) may include, for example, extended reality (XR) services, augmented reality (AR) services, virtual reality (VR) services, cloud gaming services, and the like. The VR services are services that provide a virtual environment implemented through a computer device using a VR headset or the like. The AR services are services that can combine a virtual environment with the real world by using location and geographic information. The XR services are services that can combine a real environment and a virtual environment, as well as provide information such as touch, hearing, smell, etc., to the user, thereby further enhancing the user's overall experience.

In the case of XR/AR/VR services, one or multiple devices can be used to provide the service. For example, when providing audio, video, and haptic services to the user, a device providing audio services, a device providing video services, and a device providing haptic services that implement the sense of touch by applying vibration and motion may be different. In this case, XR/AR/VR data arriving at each device through the network needs to be transmitted to the user within an appropriate time period to provide high-quality XR/AR/VR services that enhance the user's experience. In this way, in the disclosure, when providing XR/AR/VR services (hereinafter, collectively referred to as an XR service for convenience in the embodiments of the disclosure), a service according to the embodiments of the disclosure for transmitting different types of XR data to the user within a delay time suitable for the XR service is called a multi-modality service. The term "multi-modality service" used in this disclosure is for the convenience of description, and various service terms that represent the transmission of one or multiple pieces of XR data to the user within an appropriate delay time suitable for the XR services can be used.

In the description of the multi-modality service in the disclosure, the embodiments of the disclosure are based on the XR service for convenience, but the disclosure can be applied not only to the XR service but also to various data services in which multiple devices need to work together to provide services to a single user. Accordingly, it should be noted that embodiments of the disclosure are not limited to the XR service.

As described above, an XR device(s) for the XR service may directly connect to a 5G network as communication terminals and provide services according to the service scenario.

According to this disclosure, when various types of XR service data, such as audio, video, and haptic, are transmitted to multiple devices used by the same user, each XR service data may be transmitted to the terminals at similar times and transmitted to the user within an allowable delay time, thereby enhancing the user's service experience.

In addition, according to the disclosure, QoS and policy information may be defined so that scheduling in consideration of delay time can be performed in a process of transmitting various types of XR data to terminals for using the same XR service. In addition, a multi-modality service may be smoothly provided by selecting the same SMF and the same UPF to transmit related QoS and policy information to a NG-RAN and UPF.

This disclosure provides a method and apparatus for selecting an appropriate network function (NF) to smoothly process data transmitted to each terminal to have a similar delay time for a multi-modality service, when two or more terminals are used for a single user for XR service or multi-modality service in a wireless communication system.

According to the disclosure, QoS and policies can be applied successfully by allowing user terminals using XR services in a 5G system (5GS) to select the same NF enabling a multi-modality service, thereby enhancing the user experience of the XR services. This NF may be, for example, a session management function (SMF) or a user plane function (UPF).

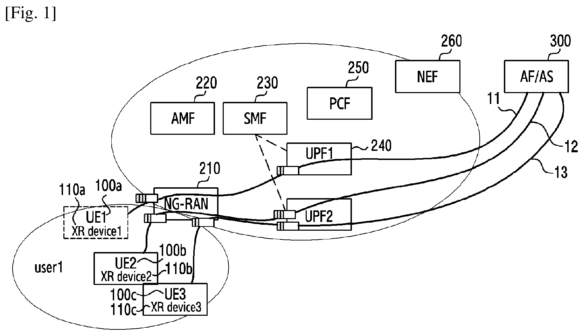

FIG. 1 is a diagram illustrating a transmission path of XR data in a wireless communication system according to an embodiment of the disclosure.

Referring to FIG. 1, transmission paths 11, 12, and 13 through which XR data according to an XR service are transmitted to a plurality of UEs 100a, 100b, and 100c used by one user (user 1) via one or a plurality of UPFs 240a and 240b and a next generation-radio access network (NG-RAN) 210 from an application function (AF)/application server (AS) 300 are illustrated. The plurality of UEs 100a, 100b, and 100c may operate as XR devices 110a, 110b, and 110c that receive different types of XR data such as audio data, video data, and haptic data.

Network technology in the disclosure may refer to standard specifications (e.g., TS 23.501, TS 23.502, TS 23.503, etc.) defined by international telecommunication union (ITU) or 3GPP, and each of components included in a network structure of FIG. 1 may mean a physical entity, or may mean software performing an individual function or hardware combined with software. In the drawings, reference numerals denoted by Nx, such as N1, N2, N3, ..., indicate known interfaces between NFs in a 5G core network (CN), and the related description will be omitted as standard specifications (for example, TS 23.501) may be referred to.

The wireless communication system of FIG. 1 includes a new generation radio access network (NG-RAN) and a 5G core network (5GC), and a NG-RAN 210 may be a base station (e.g., gNB, integrated access and backhaul {IAB}, etc.) supporting radio access technology in a 5G system. The NG-RAN 210 may provide XR service-related information and/or data transmitted from an AF/AS 300 of an external network via a core network (i.e., 5GC) to the UEs 100a, 100b, and 100c including the XR devices 110a, 110b, and 110c. In addition, the NG-RAN 210 may provide the XR service-related information and/or data received from the UEs 100a, 100b, and 100c to the AF/AS 300.

In FIG. 1, the 5GC may include network entities (or, network functions) such as an access and mobility management function (AMF) 220, a session management function (SMF) 230, a user plane function (UPF) 240, a policy control function (PCF) 250, a unified data management (UDM)(not shown), and the like.

The AMF 220 is an entity for managing the access and mobility of the UE. The AMF 220 may serve as a terminal-core network endpoint through which the UE connects to other entity(s) of the 5GC through the NG-RAN. For example, the AMF 220 may perform NF such as registration, connection, reachability, mobility management, access confirmation, authentication, and mobility event generation of the UE.

The SMF 230 may perform a management function for a protocol data unit (PDU) session of the UE. For example, the SMF 230 may perform NF such as a session management function including establishment, modification, and release of a session and maintaining a tunnel between the UPF 240 and the NG-RAN 210 necessary for this, an Internet protocol (IP) address allocation and management function of the UE, user plane selection and control, a traffic processing control in a UPF, billing data collection control, and the like.

The UPF 240 may serve to process user data (e.g., XR data) of the UE, and serve to process XR data so that the UE may transmit the generated XR data to the AF/AS 300 or transmit data received from the AF/AS 300 to the UE. For example, the UPF 240 may perform NF such as serving as an anchor between radio access technologies (RATs), providing a connection between a PDU session and the AF/AS 300, packet routing and forwarding, packet inspection, applying user plane policy, generating traffic usage reports, buffering, etc.

The UDM (not shown) may perform functions such as generating authentication information for 3GPP security, processing a user identifier (User ID), managing a list of NF supporting the UE, managing subscription information, and the like. A unified data repository (UDR) (not shown) may perform a function of storing and providing subscription information managed by the UDM, structured data for exposure, and application data related to a network exposure function (NEF) 260 or service.

The PCF 250 is an NF that manages operator policy information for providing services in the 5G system. The UDR may store subscription information of the UE and provide subscription information to the UDM. The UDR may store the operator policy information and provide the operator policy information to the PCF 250.

The NEF 260 may be in charge of transmitting or receiving events occurring in the 5G system and capabilities in the 5G system from or to the outside. For example, the NEF 260 may perform functions such as safely supplying information of the AF/AS 300 to the 5GC, converting internal/external information, and storing information received from other NFs in the UDR and redistributing the stored information.

The UE may access the NG-RAN 210 to perform registration in the 5G system. For example, the UE may access the NG-RAN 210 to perform a UE registration procedure with the AMF 220. During the registration procedure, the AMF 220 may determine a network slice available to the UE that has accessed the NG-RAN 210 and allocate the determined network slice to the UE. The UE may select a network slice to establish a PDU session for communication with the AF/AS 300. One PDU session may include one or a plurality of quality of service (QoS) flows, and each QoS flow may provide different transmission performance required for each application service by configuring different QoS parameters.

In a communication system as shown in FIG. 1, the XR data received by each XR device needs be transmitted to each XR device within an allowable delay time in order to provide the XR service. Accordingly, the time consumed when the XR data from the AF/AS is transmitted through the 5G system to a UE including the XR device or a UE connected to the XR device should be within an allowable range. For example, in order for the multi-modality service according to the embodiments of this disclosure to be enabled, the sound, touch, and image obtained when the user of the XR device touches an object in a virtual space need to be transmitted to the UE within an allowable delay time and transmitted to the XR device included in the UE.

To this end, in the embodiments of the present disclosure, there will be described a method for providing a network with a QoS and policy for transmitting XR data(s) to enable a service that can improve user experience of an XR service, that is, a multi-modality service by controlling the time consumed until the XR data(s) for providing the XR service to the user is transmitted to each XR device through the 5G system within an allowable delay time.

In addition, the embodiments of the disclosure have been described in terms of the downlink in which at least one UE receives XR data, but the methods described in the disclosure can be applied even in the uplink in which at least one UE transmits XR data in the same/similar manner.

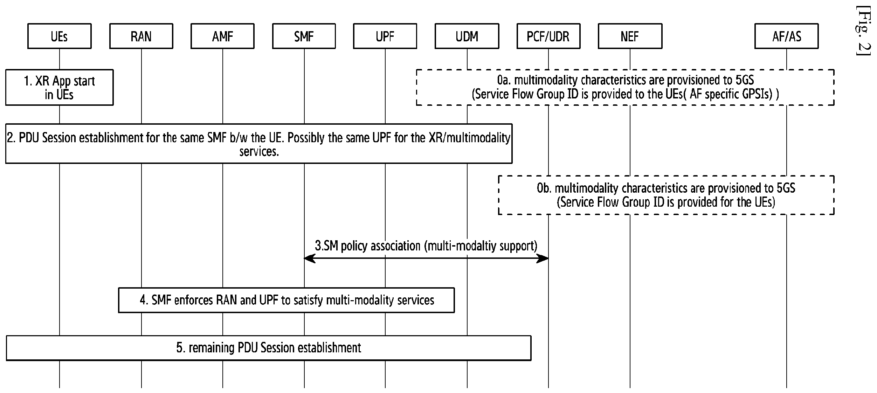

FIG. 2 is a flowchart illustrating a process of applying a QoS and policy for multi-modality to a PDU session for a multi-modality service in a wireless communication system according to an embodiment of the disclosure.

FIG. 2 illustrates a process of generating a PDU session for a procedure in which a plurality of pieces of XR data for the same XR service are transmitted to a plurality of UEs of the same user within an allowable delay time from the AF/AS, and applying a QoS and policy for multi-modality.

In FIG. 2, a case of using the XR service through UEs of the same user is considered.

First, operation 0a is an operation in which an AF provides information for an XR service to UEs for an XR service. The AF may provide an AF service flow group ID or a service flow group ID, which is information for indicating that UEs use the same XR service, to the 5G network, and a UDM or UDR may store the AF service flow group ID or the service flow group ID as subscription data of the UE. The AF service flow group ID or the service flow group ID is a value shared by the UEs for the same XR service or multi-modality service through an XR application, and the two terms will be interchangeably descried according to the situation. Based on an AF specific generic public subscription identifier (GPSI) or GPSI value given to each UE, an AF specific service flow group ID may be transmitted to a PCF through NEF by the AF and provided to the UDR, or may be transmitted to a 5G network by being transmitted to the UDM through the NEF by the AF and provided to the UDR. Next, subscription information of the UEs may include the AF specific service flow group ID.

According to an embodiment of the disclosure, operation 0b may be performed instead of operation 0a. In operation 0b, in the middle of generating the PDU session by the UEs or after the PDU session has already been generated, the AF specific service flow group ID may be provided to the 5G network for the PDU session generated for the same XR service or multi-modality service. The AF specific service flow group ID may be transmitted to the 5G network in such a manner that the AF transmits the AF specific service flow group ID to the PCF through the NEF based on the AF specific GPSI or GPSI value given to each UE or an IP address value of the UE.

In operation 1, the UEs may start preparing for an XR service. More specifically, an XR application may be started.

In operation 2, the UE and a network may generate a PDU session for XR service or multi-modality service. In this case, the network may allow the same SMF to be allocated to the UEs to equally control the PDU sessions for XR service or multi-modality service. In addition, the network may select the same UPF. That is, the network may allow the same SMF and UPF to be allocated to the UEs to control the PDU sessions to work together for the XR service or multi-modality service.

A method for the AMF to select the same SMF in the process of generating the PDU session will be separately described in a later embodiment. When the same SMF is selected for the UEs, the SMF may be controlled to select the same UPF for the PDU sessions of the UEs having service flow group IDs.

In operation 3, in order to receive policy and QoS parameters for the multi-modality service, the SMF may receive policy and QoS parameter information for multi-modality service from the PCF while generating or modifying SM policy association through the PCF.

In operation 4, the SMF may perform a procedure for the multi-modality service, such as providing QoS parameters for supporting the multi-modality service to the UPF and the NG-RAN.

In operation 5, the remaining PDU session generation procedure or PDU session modification procedure is performed.

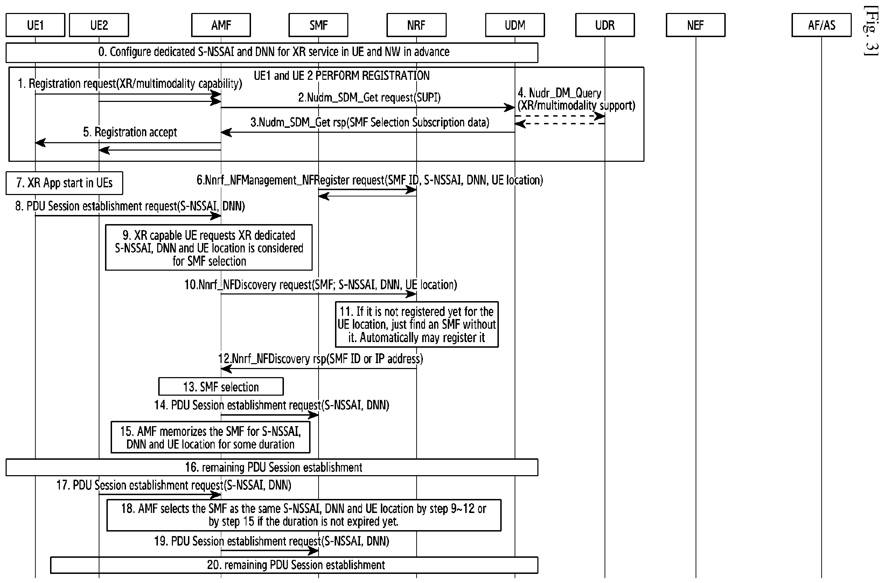

FIG. 3 is a flowchart illustrating a method for selecting an SMF in which the PDU session of each UE for one multi-modality service is the same in a wireless communication system according to an embodiment of the disclosure.

In operation 0, basic configuration for using an XR service or a multi-modality service among UE1, UE2, and a 5G system may be performed. For example, it is assumed that an XR-dedicated S-NSSAI and a data network name (DNN), which are identifiers of a dedicated network slice for the XR service or multi-modality service, are configured in a UE and/or a network. In this case, the XR-dedicated S-NSSAI may include an SST for XR service or an SST for XR service provided by a communication service operator. Additionally, the XR-dedicated S-NSSAI may include a slice differentiator (SD) for distinguishing a specific XR service or a specific XR service application.

In addition, subscription information of a UE (e.g., UE1 or UE2) configured in operation 0 may include the XR-dedicated S-NSSAI corresponding to the XR service that the UE can receive through the network, or include an AF/AS ID or application ID which is an ID of AF/AS providing the XR service to be provided by the UE or an AF-specific GPSI or GPSI which is an ID for defining a UE in AF/AS. In addition, when a group of UEs (or XR devices) provided with the XR service is predetermined, an AF-specific SF group ID, user ID, or pairing information for defining the group may be included in the subscription information. In this manner, when the subscription information includes the AF-specific SF group ID, a procedure of configuring the AF-specific SF group between the UE (e.g., UE1 or UE2) and the AF/AS and a procedure of providing the AF-specific SF group ID, user ID, or pairing information, which is information indicating the configured group, to the 5G system can be omitted, and if necessary, the information configured in operation 0 may be updated in the network.

In operations 1 to 5, UE1 and UE2 for receiving the XR service perform registration in the 5G network. The operations are described in detail as below.

In operation 1, each UE may include capability information indicating XR function support or multi-modality service function support in a registration request message and transmit the registration request message to an AMF.

In operation 2, the AMF performs a procedure of retrieving subscription information in the registration process. When the UDM does not have enough subscription information, operation 4 is performed. In operation 4, the UDM may request, from the UDR, and retrieve the subscription information by including information indicating the XR service is supported or information indicating that the multi-modality service is supported, in the registration request message.

In operation 3, the UDM includes the subscription information on the UE in the message and transmits the message to the AMF. The subscription information may include an SMF selection subscription data value, which is information for AMF to select an appropriate SMF. The SMF selection subscription data may include an indicator indicating that the XR service is supported to a specific S-NSSAI and DNN or an indicator indicating that the multi-modality service is supported thereto.

In operation 5, the UEs complete registration with the 5G network.

In operation 6, the SMF may include the S-NSSAI and DNN allocated for the XR service or multi-modality service, location information of the UE to be serviced, or location information where the SMF can provide services for multi-modality, and register the included information with a network repository function (NRF). For example, Nnrf_NFManagement_NFRegister request message may be registered by including ID or address information of the SMF, S-NSSAI, DNN information, and location information where services can be provided together. The location information where services can be provided may be an ID or cell ID, or a tracking area (TA) ID of the NG-RAN ID.

In operation 7, the UEs start the XR service or multi-modality service. More specifically, an XR application may be started.

In operation 8, the UE includes the S-NSSAI and DNN in a PDU session establishment request message and transmits the message to the AMF.

In operation 9, the AMF that has received the PDU session establishment request message may recognize that the position of the UE should be additionally considered in selecting the SMF, when receiving information indicating that the UE supports the XR service or the modality service for the S-NSSAI and DNN requested by the UE, information indicating that the requested S-NSSAI and DNN are S-NSSAI and DNN dedicated for the XR service or multi-modality service, subscription information transmitted by an indicator indicating that the XR service or multi-modality service is supported for the requested S-NSSAI and DNN, for example, SMF selection subscription information.

In operation 10, the AMF may request, from the NRF, to find appropriate SMF information while allowing the Nnrf_NFDiscovery request message to include the S-NSSAI and DNN and the location information of the UE. The location information of the UE may include an ID, a Cell ID, or a TA ID of the NG-RAN accessed by the UE.

In operation 11, when there is no SMF corresponding to the location information of the UE in the NRF, the SMF may be selected while excluding the location information. In addition, the SMF may be automatically registered with the NRF for the corresponding information.

In operation 12, the AMF receives ID or address information of the SMF for the list of SMF candidates that can be selected from the NRF.

In operation 13, the AMF selects the corresponding SMF from the SMFs received from the NRF.

In operation 14, the AMF transmits the PDU session establishment request message to the selected SMF.

In operation 15, the AMF may store the ID or address information of the selected SMF for a certain period of time for the S-NSSAI, DNN, and UE location. Thereafter, the AMF allows the same SMF to be selected for a UE having the same S-NSSAI, DNN, and location information.

In operation 16, the remaining PDU session generation procedure or PDU session modification procedure is performed.

In operation 17, another UE requests the PDU session establishment request message from the AMF while allowing the S-NSSAI and DNN to be included in the message.

In operation 18, the AMF may request selection of an appropriate SMF from the NRF. That is, as in operations 9 to 12, the AMF may select the same SMF in consideration of the S-NSSAI and DNN and the location information of the UE, or select the same SMF when the AMF has the SMF information corresponding to the S-NSSAI and DNN and the location information of the UE which are stored in operation 15.

In operation 19, the AMF transmits the PDU session establishment request message to the selected SMF, and in operation 20, the remaining PDU session establishment procedure is performed.

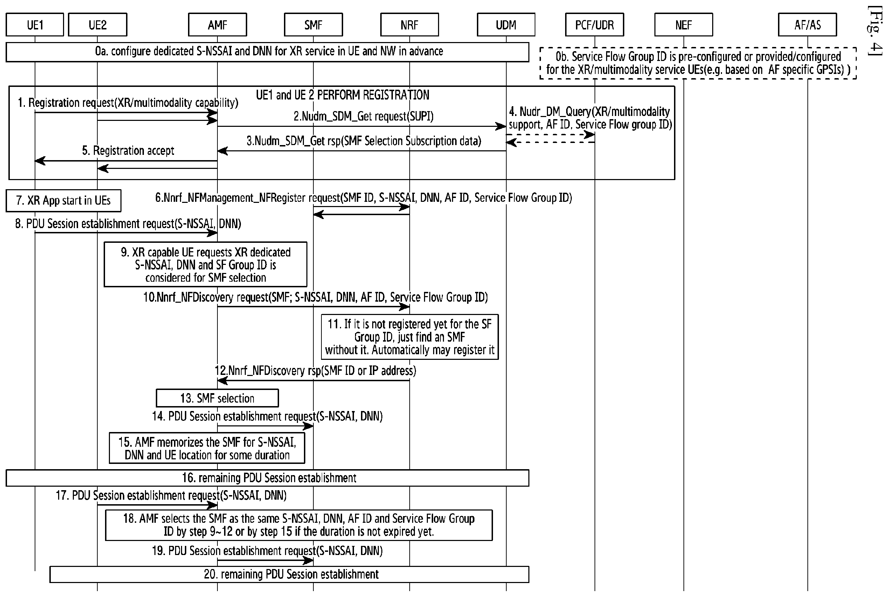

FIG. 4 is a flowchart illustrating a method for selecting an SMF in which the PDU session of each UE is the same for one multi-modality service in a wireless communication system according to another embodiment of the present disclosure.

In operation 0a, basic configuration for using an XR service or multi-modality service among UE1, UE2, and a 5G system may be performed. For example, it is assumed that XR-dedicated S-NSSAI and DNN, which are identifiers of dedicated network slices for XR service or multi-modality service, are configured in a UE and/or network. In this case, the XR-dedicated S-NSSAI may include an SST for XR service or an SST for XR service provided by a communication service operator. Additionally, the XR-dedicated S-NSSAI may include a slice differentiator (SD) for distinguishing a specific XR service or a specific XR service application.

In addition, subscription information of a UE (e.g., UE1 or UE2) configured in operation 0a may include XR-dedicated S-NSSAI corresponding to the XR service that the UE can receive through the network, AF/AS ID or application ID, which is an ID of AF/AS that provides the XR service to be provided by the UE, and AF-specific GPSI or GPSI, which is an ID for defining the UE in the AF/AS. In addition, when a group of UEs (or XR devices) receiving the XR service together is predetermined, an AF-specific SF group ID, a user ID, or pairing information for defining the group may be included in the subscription information. In this manner, when the subscription information includes the AF-specific SF group ID, a procedure for configuring an AF-specific SF group between the UE (e.g., UE1 or UE2) and the AF/AS and a procedure for providing the AF-specific SF group ID, the user ID, or the pairing information, which is information indicating the configured group, to the 5G system may be provided or omitted through operation 0b, or may be updated in the network in operation 0b, if necessary.

Operation 0a is an operation in which the AF provides information for the XR service to UEs for the XR service. The AF may provide an AF service flow group ID or service flow group ID, which is information for indicating that UEs use the same XR service, to the 5G network, and the UDM or UDR may store the AF service flow group ID or service flow group ID as subscription data of the UE. The AF service flow group ID or service flow group ID is a value shared by UEs for the same XR service or multi-modality service through the XR application, and the two terms will be interchangeably descried according to the situation. Based on an AF specific GPSI or GPSI value given to each UE, an AF specific service flow group ID may be transmitted to a PCF through NEF by the AF and provided to the UDR, or may be transmitted to a 5G network by being transmitted to the UDM through the NEF by the AF and provided to the UDR. Next, the subscription information of the UEs may include the AF specific service flow group ID.

Accordingly, it is assumed that the subscription information of the UE includes the AF ID and the AF specific service flow group ID and is stored in the UDM or UDR before the UEs perform registration.

Meanwhile, in operations 1 to 5, UE1 and UE2 for receiving the XR service perform registration in the 5G network. The operations are described in detail as below.

In operation 1, each UE may include capability information indicating XR function support or multi-modality service function support in a registration request message, and transmit the registration request message to the AMF.

In operation 2, the AMF performs a procedure for retrieving the subscription information in the registration process. When the UDM does not have enough subscription information, operation 4 is performed. In operation 4, the UDM requests the subscription information from the UDR while allowing the subscription information to include information indicating that the XR service is supported, information indicating that the multi-modality service is supported, an AF ID indicating an application providing service, or an AF specific service flow group ID indicating a group of UEs receiving the multi-modality services together, and retrieve the subscription information.

In operation 3, the UDM transmits the message to the AMF while allowing the message to include the subscription information for the UE. The subscription information may include an SMF selection subscription data value, which is information for the AMF to select an appropriate SMF. The SMF selection subscription data may include an indicator indicating that the XR service is supported for a specific S-NSSAI and DNN, an indicator indicating that the multi-modality service is supported for the same, the AF specific service flow group ID indicating a group of UEs receiving the AF ID indicating the application providing services and the multi-modality service together.

In operation 5, UEs complete registration with the 5G network.

In operation 6, the SMF may include S-NSSAI and DNN allocated for XR service or multi-modality service, information on the group to which the UE to be serviced belongs, that is, AF ID, and the AF specific service flow group ID, and register the included information with a network repository function (NRF). For example, Nnrf_NFManagement _NFRegister request message may be registered by including ID or address information of the SMF, S-NSSAI, DNN information, information on the group to which the UE to be serviced together belongs, that is, AF ID, and the AF specific service flow group ID.

In operation 7, the UEs start the XR service or multi-modality service. More specifically, an XR application may be started.

In operation 8, the UE transmits a PDU session establishment request message to the AMF while allowing the S-NSSAI and DNN to be included in the PDU session establishment request message.

In operation 9, when receiving subscription information, for example, SMF selection subscription information while allowing the subscription information to include information indicating that the UE supports the XR service or the multi-modality service for the requested S-NSSAI and DNN, information on the group to which the UE belongs together with an indicator indicating that the requested S-NSSAI and DNN is S-NSSAI and DNN defined to be dedicated to the XR service or the multi-modality service or is for supporting the XR service or multi-modality service for the requested S-NSSAI and DNN, that is, AF ID and AF specific service flow group ID, the AMF that has received the PDU session establishment request message may select the SMF by using the received information.

In operation 10, the AMF may request, from the NRF, to find appropriate SMF information while allowing the Nnrf_NFDiscovery request message to include the S-NSSAI and DNN and the information on the group to which the UE belongs, that is, the AF ID and AF specific service flow group ID.

In operation 11, when there is no SMF corresponding to the AF specific service flow group ID of the UE in the NRF, the SMF may be selected while excluding the AF specific service flow group ID. In addition, the SMF may be automatically registered with the NRF for the corresponding information.

In operation 12, the AMF receives ID or address information of the SMF for the list of SMF candidates that can be selected from the NRF.

In operation 13, the AMF selects the corresponding SMF from the SMFs received from the NRF.

In operation 14, the AMF transmits the PDU session establishment request message to the selected SMF.

In operation 15, the AMF may store the ID or address information of the selected SMF for a certain period of time for the S-NSSAI, DNN, AFID, and AF specific service flow group ID. Thereafter, the AMF allows the same SMF to be selected for the UE of the same AFID and AF specific service flow group ID for the same S-NSSAI and DNN.

In operation 16, the remaining PDU session generation procedure or PDU session modification procedure is performed.

In operation 17, another UE requests the PDU session establishment request message from the AMF while allowing the S-NSSAI and DNN to be included in the PDU session establishment request message.

In operation 18, the AMF may request selection of an appropriate SMF from the NRF. That is, as in operations 9 to 12, the AMF may select the same SMF in consideration of the S-NSSAI and DNN and the AFID and AF specific service flow group ID to which the UE belongs, or select the same SMF when the AMF has the SMF information corresponding to the S-NSSAI and DNN and the location information of the UE which are stored in operation 15.

In operation 19, the AMF transmits the PDU session establishment request message to the selected SMF, and in operation 20, the remaining PDU session establishment procedure is performed.

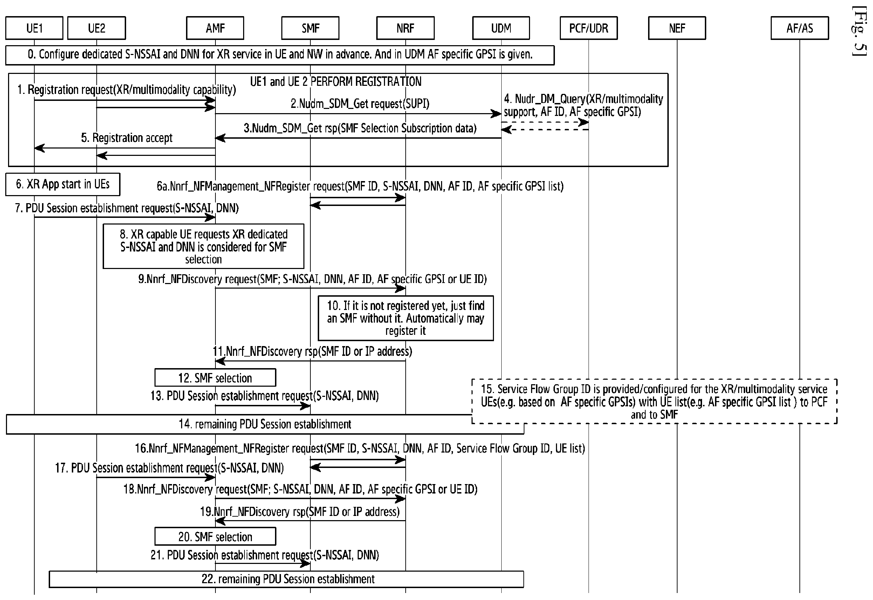

FIG. 5 is a flowchart illustrating a method for selecting an SMF in which the PDU session of each UE is the same for one multi-modality service in a wireless communication system according to still another embodiment of the present disclosure.

In operation 0a, basic configuration for using an XR service or multi-modality service among UE1, UE2, and a 5G system may be performed. For example, it is assumed that XR-dedicated S-NSSAI and DNN, which are identifiers of dedicated network slices for XR service or multi-modality service, are configured in a UE and/or network. In this case, the XR-dedicated S-NSSAI may include an SST for XR service or an SST for XR service provided by a communication service operator. Additionally, the XR-dedicated S-NSSAI may include a slice differentiator (SD) for distinguishing a specific XR service or a specific XR service application.

In addition, subscription information of a UE (e.g., UE1 or UE2) configured in operation 0 may include XR-dedicated S-NSSAI corresponding to the XR service that the UE can receive through the network, AF/AS ID or application ID, which is an ID of AF/AS that provides the XR service to be provided by the UE, and AF-specific GPSI or GPSI, which is an ID for defining the UE in the AF/AS.

Therefore, it is assumed that the AF specific GPSI or GPSI is included in the subscription information of the UE and stored in the UDM or UDR before UEs perform registration.

Meanwhile, in operations 1 to 5, UE1 and UE2 for receiving the XR service perform registration in the 5G network. The operations are described in detail as below.

In operation 1, each UE may include capability information indicating XR function support or multi-modality service function support in a registration request message, and transmit the registration request message to the AMF.

In operation 2, the AMF performs a procedure for retrieving the subscription information in the registration process. When the UDM does not have enough subscription information, operation 4 is performed. In operation 4, the UDM may request the subscription information from the UDR while allowing the subscription information to include information indicating that the XR service is supported, information indicating that the multi-modality service is supported, an AF ID indicating an application providing service, or an AF specific GPSI which is an ID of a UE for the multi-modality service, and retrieve the subscription information.

In operation 3, the UDM transmits the message to the AMF while allowing the message to include the subscription information for the UE. The subscription information may include an SMF selection subscription data value, which is information for the AMF to select an appropriate SMF. The SMF selection subscription data may include an indicator indicating that the XR service is supported for a specific S-NSSAI and DNN, an indicator indicating that the multi-modality service is supported for the same, an AF ID indicating the application providing services, or an AF specific GPSI which is an ID of a UE for the multi-modality service.

In operation 5, UEs complete registration with the 5G network.

In operation 6a, the SMF may include S-NSSAI and DNN allocated for XR service or multi-modality service, information on the group to which the UE to be serviced belongs, that is, AF ID and AF specific GPSI list, and register the included information with a network repository function (NRF). For example, Nnrf_NFManagement _NFRegister request message may be registered by including ID or address information of the SMF, S-NSSAI, DNN information, information on the group to which the UE to be serviced together belongs, that is, AF ID and the AF specific GPSI list.

As shown in operation 6, the UEs start the XR service or multi-modality service. More specifically, an XR application may be started.

In operation 7, the UE transmits a PDU session establishment request message to the AMF while allowing the S-NSSAI and DNN to be included in the PDU session establishment request message.

In operation 8, when receiving subscription information, for example, SMF selection subscription information while allowing the subscription information to include information indicating that the UE supports the XR service or the multi-modality service for the requested S-NSSAI and DNN, information on the group to which the UE belongs together with an indicator indicating that the requested S-NSSAI and DNN is S-NSSAI and DNN defined to be dedicated to the XR service or the multi-modality service or is for supporting the XR service or multi-modality service for the requested S-NSSAI and DNN, that is, AF ID and AF specific service flow group ID, the AMF that has received the PDU session establishment request message may select the SMF by using the received information.

In operation 9, the AMF may request, from the NRF, to find appropriate SMF information while allowing the Nnrf_NFDiscovery request message to include the S-NSSAI and DNN and information on the UE used in the service, that is, the AF ID and AF specific GPSI.

In operation 10, when there is no SMF corresponding to the AF specific GPSI of the UE in the NRF, the SMF may be selected while excluding the AF specific GPSI. In addition, the SMF may be automatically registered with the NRF for the corresponding information.

In operation 11, the AMF receives ID or address information of the SMF for the list of SMF candidates that can be selected from the NRF.

In operation 12, the AMF selects the corresponding SMF from the SMFs received from the NRF.

In operation 13, the AMF transmits the PDU session establishment request message to the selected SMF.

In operation 14, the remaining PDU session establish procedure is performed.

In operation 15, corresponding information including a list or a UE ID list of the AF specific GPSI which is information of the UEs together with information on the AF ID and AF specific service group ID indicating the group of the UEs receiving the multi-modality service to which the UE belongs may be transmitted to the PCF through the NEF from the AF, and may be transmitted to the SMF through SM policy association establishment or modification procedures.

In the case of the SMF that has received the list of the AF specific GPSI together with the AF ID and AF specific service group ID, as shown in operation 16, the S-NSSAI and DNN allocated for the XR service or multi-modality service, information on the group to which the UE to be serviced belongs, that is, AF ID and AF specific service flow group ID may be included in the corresponding message, and the list or UE ID list of the AF specific GPSI may be included in the corresponding message, and may be registered with the NRF. For example, the Nnrf_NFManagement_NFRegister request message may include ID or address information of the SMF, S-NSSAI, DNN information, information on the group to which the UE to be served together belongs, that is, the AF ID and AF specific service flow group ID, and include the list or UE ID list of the AF specific GPSI, that is the information of the UE belonging to the corresponding group, and register the message with the NRE.

In operation 17, another UE requests the PDU session establishment request message from the AMF while allowing the PDU session establishment request message to include the S-NSSAI and DNN.

In operation 18, the AMF may request a selection of an appropriate SMF from the NRF. That is, as in operations 9 to 11, the AMF may select the same SMF in operation 20 in consideration of the S-NSSAI and DNN, the AF ID to which the UE belongs, and the AF specific GPSI.

In operation 21, the AMF transmits the PDU session establishment request message to the selected SMF, and in operation 22, the remaining PDU session establishment procedure is performed.

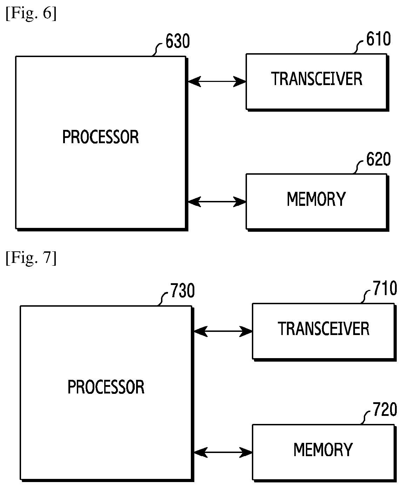

FIG. 6 is a diagram illustrating a configuration of a UE according to an embodiment of the disclosure.

As illustrated in FIG. 6, a UE according to the disclosure may include a transceiver 610, a memory 620, and a processor 630. The processor 630, the transceiver 610, and the memory 620 of the UE may operate according to the above-described communication method of the UE. However, the components of the UE are not limited to the above-described examples. For example, the UE may include more or fewer components than the aforementioned components. In addition, the processor 630, the transceiver 610, and the memory 620 may be implemented as a single chip.

The transceiver 610 collectively refers to a reception unit of the UE and a transmission unit of the UE, and may transmit/receive signals to/from a base station or a network entity. The signals transmitted and received to and from the base station may include control information and data. To this end, the transceiver 610 may include an RF transmitter for up-converting and amplifying the frequency of a transmitted signal, and an RF receiver for low-noise amplifying a received signal and down-converting the frequency of the received signal. However, this is only one embodiment of the transceiver 610, and components of the transceiver 610 are not limited to the RF transmitter and the RF receiver.

In addition, the transceiver 610 may include a wired/wireless transceiver, and may include various configurations for transmitting and receiving signals.

In addition, the transceiver 610 may receive a signal through a wireless channel, output the received signal to the processor 630, and transmit a signal output from the processor 630 through a wireless channel.

In addition, the transceiver 610 may receive a communication signal and output the received communication signal to a processor, and transmit the signal output from the processor to the network entity through a wired or wireless network.

The memory 620 may store programs and data required for operation of the UE. In addition, the memory 620 may store control information or data included in a signal obtained from the UE. The memory 620 may include a storage medium such as a ROM, a RAM, a hard disk, a CD-ROM, and a DVD, or a combination of storage media.

The processor 630 may control a series of processes so that the UE may operate according to the above-described embodiment of the disclosure. The processor 630 may include one or more processors. For example, the processor 630 may include a communication processor (CP) that controls communication and an application processor (AP) that controls upper layers such as application programs.

FIG. 7 is a diagram illustrating a configuration of a network entity according to an embodiment of the disclosure.

As illustrated in FIG. 7, a network entity according to the disclosure may include a transceiver 710, a memory 720, and a processor 730. The processor 730, the transceiver 710, and the memory 720 of the network entity may operate according to the above-described communication method of the network entity. However, the components of the network entity are not limited to the above examples. For example, the network entity may include more or fewer components than those described above. In addition, the processor 730, the transceiver 710, and the memory 720 may be implemented as a single chip. The network entity may include network function (NF) such as access and mobility management function (AMF), session management function (SMF), policy and charging function (PCF), network exposure function (NEF), unified data management (UDM), user plane function (UPF), etc. In addition, the network entity of FIG. 7 may include a base station.

The transceiver 710 collectively refers to a reception unit of the network entity and a transmission unit of the network entity, and may transmit/receive signals to/from a UE or another network entity. At this time, the signal to be transmitted and received may include control information and data. To this end, the transceiver 710 may include an RF transmitter that up-converts and amplifies the frequency of a transmitted signal, and an RF receiver that low-amplifies a received signal and down-converts the frequency of the signal. However, this is only one embodiment of the transceiver 710, and components of the transceiver 710 are not limited to the RF transmitter and the RF receiver. The transceiver 710 may include a wired/wireless transceiver and may include various configurations for transmitting and receiving signals.

In addition, the transceiver 710 may receive a signal through a communication channel (e.g., a wireless channel), output the signal to the processor 730, and transmit the signal output from the processor 730 through the communication channel.

In addition, the transceiver 710 may receive a communication signal, output the received communication signal to the processor, and transmit the signal output from the processor to the UE or network entity through a wired or wireless network.

The memory 720 may store programs and data necessary for the operation of network entity. In addition, the memory 720 may store control information or data included in a signal obtained from the network entity. The memory 720 may include a storage medium such as a ROM, a RAM, a hard disk, a CD-ROM, and a DVD, or a combination of storage media.

The processor 730 may control a series of processes so that the network entity may operate according to the above-described embodiment of the disclosure. The processor 730 may include one or more processors.

The methods according to various embodiments described in the claims or the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the disclosure as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. Further, a plurality of such memories may be included in the electronic device.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access a portable electronic device.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the scope of the disclosure.

Furthermore, in methods of the disclosure, some or all of the contents of each embodiment may be implemented in combination without departing from the scope of the disclosure.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

## Claims

1. A method performed by an access and mobility management function, AMF, entity in a wireless communication system supporting multi-modality service, the method comprising:
transmitting, to a unified data management , UDM, entity a message for requesting subscription information for at least one user equipment, UE,
receiving, from the UDM entity, a session management function, SMF, selection subscription data for the at least one UE, wherein the SMF selection subscription data includes at least one of first information indicating that the multi-modality service is supported for a network slice, or second information on a service flow group identifier indicating a group of UEs receiving the multi-modality service together;
receiving, from the at least one UE, a protocol data unit, PDU, session establishment request message including slice information for the network slice; and
selecting an SMF entity for the at least one UE among at least one SMF entity based on the SMF selection subscription data.

2. The method of claim 1, wherein a same SMF entity is selected for at least one PDU session associated with the multi-modality service as another UE associated with the same multi-modality service.

3. The method of claim 1, wherein the slice information includes single network slice selection assistance information, S-NSSAI, and a data network name, DNN.

4. The method of claim 1, wherein the location includes at least one of a cell identity or a tracking area identity, and
wherein information on the selected SMF entity is registered to a network repository function, NRF, entity for the multi-modality service.

5. A method performed by a unified data management, UDM, entity in a wireless communication system supporting multi-modality service, the method comprising:
receiving, from an access and mobility management function, AMF, entity, a message for requesting subscription information for at least one user equipment, UE; and
transmitting, to the AMF entity, a session management function, SMF, selection subscription data for the at least one UE, the SMF selection subscription data including at least one of first information indicating that the multi-modality service is supported for a network slice, or second information on a service flow group identifier indicating a group of UEs receiving the multi-modality service together
wherein a protocol data unit, PDU, session for the at least one UE is established based on slice information for the network slice, and
wherein an SMF entity associated with the PDU session depends on the SMF selection subscription data.

6. The method of claim 5, wherein a same SMF entity is selected for at least one PDU session associated with the multi-modality service as another UE associated with the same multi-modality service, and,
wherein the slice information includes single network slice selection assistance information, S-NSSAI, and a data network name, DNN.

7. The method of claim 5, wherein the location includes at least one of a cell identity or a tracking area identity, and
wherein information on the selected SMF entity is registered to a network repository function, NRF, entity for the multi-modality service.

8. An access and mobility management function, AMF, entity in a wireless communication system supporting multi-modality service, the AMF entity comprising:
at least one processor; and
at least one memory, communicatively coupled to the at least one processor, storing instructions executable by the at least one processor individually or in any combination to cause the AMF entity to:
transmit, to a unified data management , UDM, entity a message for requesting subscription information for at least one user equipment, UE,
receive, from the UDM entity, a session management function, SMF, selection subscription data for the at least one UE, wherein the SMF selection subscription data includes at least one of first information indicating that a multi-modality service is supported for a network slice, or second information on a service flow group identifier indicating a group of UEs receiving the multi-modality service together
receive, from the at least one UE, a protocol data unit, PDU, session establishment request message including slice information for the network slice, and
select an SMF entity for the at least one UE among at least one SMF entity based on the SMF selection subscription data.

9. The AMF entity of claim 8, wherein a same SMF entity is selected for at least one PDU session associated with the multi-modality service.

10. The AMF entity of claim 8, wherein the slice information includes single network slice selection assistance information, S-NSSAI, and a data network name, DNN.

11. The AMF entity of claim 8, wherein the location includes at least one of a cell identity or a tracking area identity, and
wherein information on the selected SMF entity is registered to a network repository function, NRF, entity for the multi-modality service.

12. A unified data management, UDM, entity in a wireless communication system supporting multi-modality service, the UDM entity comprising:
at least one processor; and
at least one memory, communicatively coupled to the at least one processor, storing instructions executable by the at least one processor individually or in any combination to cause the UDM entity to:
receive, from an access and mobility management function, AMF, entity, a message for requesting subscription information for at least one user equipment, UE, and
transmit, to the AMF entity, a session management function, SMF, selection subscription data for the at least one UE, the SMF selection subscription data including at least one of first information indicating that a multi-modality service is supported for a network slice, or second information on a service flow group identifier indicating a group of UEs receiving the multi-modality service together
wherein a protocol data unit, PDU, session for the at least one UE is established based on slice information for the network slice, and
wherein an SMF entity associated with the PDU session depends on the SMF selection subscription data.

13. The UDM entity of claim 12, wherein a same SMF entity is selected for at least one PDU session associated with the multi-modality service as another UE associated with the same multi-modality service.

14. The UDM entity of claim 12, wherein the slice information includes single network slice selection assistance information, S-NSSAI, and a data network name, DNN.

15. The UDM entity of claim 12, wherein the location includes at least one of a cell identity or a tracking area identity, and
wherein information on the selected SMF entity is registered to a network repository function, NRF, entity for the multi-modality service.

## Patentansprüche

1. Verfahren, das durch eine Zugriffs- und Mobilitätsverwaltungsfunktions-Entität, AMF-Entität, in einem drahtlosen Kommunikationssystem durchgeführt wird, das einen multimodalen Dienst unterstützt, wobei das Verfahren Folgendes umfasst:
Übertragen einer Nachricht zum Anfordern von Abonnementinformationen für mindestens ein Benutzergerät, UE, an eine einheitliche Datenverwaltungs-Entität, UDM-Entität,
Empfangen, von der UDM-Entität, von Sitzungsverwaltungsfunktions-Auswahlabonnementdaten, SMF-Auswahlabonnementdaten, für das mindestens eine UE, wobei die SMF-Auswahlabonnementdaten mindestens eines von ersten Informationen, die angeben, dass der multimodale Dienst für einen Netzwerk-Slice unterstützt wird, oder zweiten Informationen über eine Dienstablaufgruppenkennung, die eine Gruppe von UEs angeben, die den multimodalen Dienst gemeinsam empfangen, enthalten;
Empfangen, von dem mindestens einen UE, einer Protokolldateneinheit-Sitzungseinrichtungsanforderungsnachricht, PDU-Sitzungseinrichtungsanforderungsnachricht, die Slice-Informationen für das Netzwerk-Slice enthält; und
Auswählen einer SMF-Entität für das mindestens eine UE aus mindestens einer SMF-Entität auf Grundlage der SMF-Auswahlabonnementdaten.

2. Verfahren nach Anspruch 1, wobei eine gleiche SMF-Entität für mindestens eine PDU-Sitzung, die dem multimodalen Dienst zugeordnet ist, als ein anderes UE, das dem gleichen multimodalen Dienst zugeordnet ist, ausgewählt wird.

3. Verfahren nach Anspruch 1, wobei die Slice-Informationen Single-Network-Slice-Auswahlunterstützungsinformationen, S-NSSAI, und einen Datennetzwerknamen, DNN, enthalten.

4. Verfahren nach Anspruch 1, wobei der Standort mindestens eines von einer Zellidentität oder einer Tracking-Bereichsidentität enthält und
wobei Informationen über die ausgewählte SMF-Entität in einer Netzwerkverzeichnungsfunktions-Entität, NRF-Entität, für den multimodalen Dienst registriert sind.

5. Verfahren, das durch eine einheitliche Datenverwaltungs-Entität, UDM-Entität, in einem drahtlosen Kommunikationssystem durchgeführt wird, das einen multimodalen Dienst unterstützt, wobei das Verfahren Folgendes umfasst:
Empfangen einer Nachricht zum Anfordern von Abonnementinformationen für mindestens ein Benutzergerät, UE, von einer Zugriffs- und Mobilitätsverwaltungsfunktions-Entität, AMF-Entität; und
Übertragen, an die AMF-Entität, von Sitzungsverwaltungsfunktions-Auswahlabonnementdaten, SMF-Auswahlabonnementdaten, für das mindestens eine UE, wobei die SMF-Auswahlabonnementdaten mindestens eines von ersten Informationen, die angeben, dass der multimodale Dienst für einen Netzwerk-Slice unterstützt wird, oder zweiten Informationen über eine Dienstablaufgruppenkennung, die eine Gruppe von UEs angeben, die den multimodalen Dienst gemeinsam empfangen, enthalten,
wobei eine Protokolldateneinheit-Sitzung, PDU-Sitzung, für das mindestens eine UE basierend auf Slice-Informationen für das Netzwerk-Slice eingerichtet wird, und
wobei eine SMF-Entität, die der PDU-Sitzung zugeordnet ist, von den SMF-Auswahlabonnementdaten abhängt.

6. Verfahren nach Anspruch 5, wobei eine gleiche SMF-Entität für mindestens eine PDU-Sitzung, die dem multimodalen Dienst zugeordnet ist, als ein anderes UE, das dem gleichen multimodalen Dienst zugeordnet ist, ausgewählt wird und
wobei die Slice-Informationen Single-Network-Slice-Auswahlunterstützungsinformationen, S-NSSAI, und einen Datennetzwerknamen, DNN, enthalten.

7. Verfahren nach Anspruch 5, wobei der Standort mindestens eines von einer Zellidentität oder einer Tracking-Bereichsidentität enthält und
wobei Informationen über die ausgewählte SMF-Entität in einer Netzwerkverzeichnungsfunktions-Entität, NRF-Entität, für den multimodalen Dienst registriert sind.

8. Zugriffs- und Mobilitätsverwaltungsfunktions-Entität, AMF-Entität, in einem drahtlosen Kommunikationssystem, das einen multimodalen Dienst unterstützt, wobei die AMF-Entität Folgendes umfasst:
mindestens einen Prozessor; und
mindestens einen Speicher, der kommunikativ an den mindestens einen Prozessor gekoppelt ist, der Anweisungen speichert, die durch den mindestens einen Prozessor einzeln oder in einer beliebigen Kombination ausführbar sind, um die AMF-Entität zu Folgendem zu veranlassen:
Übertragen einer Nachricht zum Anfordern von Abonnementinformationen für mindestens ein Benutzergerät, UE, an eine einheitliche Datenverwaltungs-Entität, UDM-Entität, Empfangen, von der UDM-Entität, von Sitzungsverwaltungsfunktions-Auswahlabonnementdaten, SMF-Auswahlabonnementdaten, für das mindestens eine UE, wobei die SMF-Auswahlabonnementdaten mindestens eines von ersten Informationen, die angeben, dass ein multimodaler Dienst für einen Netzwerk-Slice unterstützt wird, oder zweiten Informationen über eine Dienstablaufgruppenkennung, die eine Gruppe von UEs angeben, die den multimodalen Dienst gemeinsam empfangen, enthalten,
Empfangen, von dem mindestens einen UE, einer Protokolldateneinheit-Sitzungseinrichtungsanforderungsnachricht, PDU-Sitzungseinrichtungsanforderungsnachricht, die Slice-Informationen für das Netzwerk-Slice enthält, und
Auswählen einer SMF-Entität für das mindestens eine UE aus mindestens einer SMF-Entität auf Grundlage der SMF-Auswahlabonnementdaten.

9. AMF-Entität nach Anspruch 8, wobei eine gleiche SMF-Entität für mindestens eine PDU-Sitzung, die dem multimodalen Dienst zugeordnet ist, ausgewählt wird.

10. AMF-Entität nach Anspruch 8, wobei die Slice-Informationen Single-Network-Slice-Auswahlunterstützungsinformationen, S-NSSAI, und einen Datennetzwerknamen, DNN, enthalten.

11. AMF-Entität nach Anspruch 8, wobei der Standort mindestens eines von einer Zellidentität oder einer Tracking-Bereichsidentität enthält und
wobei Informationen über die ausgewählte SMF-Entität in einer Netzwerkverzeichnungsfunktions-Entität, NRF-Entität, für den multimodalen Dienst registriert sind.

12. Einheitliche Datenverwaltungs-Entität, UDM-Entität, in einem drahtlosen Kommunikationssystem, das einen multimodalen Dienst unterstützt, wobei die UDM-Entität Folgendes umfasst:
mindestens einen Prozessor; und
mindestens einen Speicher, der kommunikativ an den mindestens einen Prozessor gekoppelt ist, der Anweisungen speichert, die durch den mindestens einen Prozessor einzeln oder in einer beliebigen Kombination ausführbar sind, um die UDM-Entität zu Folgendem zu veranlassen:
Empfangen einer Nachricht zum Anfordern von Abonnementinformationen für mindestens ein Benutzergerät, UE, von einer Zugriffs- und Mobilitätsverwaltungsfunktions-Entität, AMF-Entität, und
Übertragen, an die AMF-Entität, von Sitzungsverwaltungsfunktions-Auswahlabonnementdaten, SMF-Auswahlabonnementdaten, für das mindestens eine UE, wobei die SMF-Auswahlabonnementdaten mindestens eines von ersten Informationen, die angeben, dass ein multimodaler Dienst für einen Netzwerk-Slice unterstützt wird, oder zweiten Informationen über eine Dienstablaufgruppenkennung, die eine Gruppe von UEs angeben, die den multimodalen Dienst gemeinsam empfangen, enthalten,
wobei eine Protokolldateneinheit-Sitzung, PDU-Sitzung, für das mindestens eine UE basierend auf Slice-Informationen für das Netzwerk-Slice eingerichtet wird, und
wobei eine SMF-Entität, die der PDU-Sitzung zugeordnet ist, von den SMF-Auswahlabonnementdaten abhängt.

13. UDM-Entität nach Anspruch 12, wobei eine gleiche SMF-Entität für mindestens eine PDU-Sitzung, die dem multimodalen Dienst zugeordnet ist, als ein anderes UE, das dem gleichen multimodalen Dienst zugeordnet ist, ausgewählt wird.

14. UDM-Entität nach Anspruch 12, wobei die Slice-Informationen Single-Network-Slice-Auswahlunterstützungsinformationen, S-NSSAI, und einen Datennetzwerknamen, DNN, enthalten.

15. UDM-Entität nach Anspruch 12, wobei der Standort mindestens eines von einer Zellidentität oder einer Tracking-Bereichsidentität enthält und
wobei Informationen über die ausgewählte SMF-Entität in einer Netzwerkverzeichnungsfunktions-Entität, NRF-Entität, für den multimodalen Dienst registriert sind.

## Revendications

1. Procédé réalisé par une entité à fonction de gestion d'accès et de mobilité, AMF, dans un système de communication sans fil prenant en charge un service multimodalité, le procédé comprenant :
la transmission, à une entité de gestion unifiée de données, UDM, d'un message de demande d'informations d'inscription pour au moins un équipement utilisateur, UE,
la réception, en provenance de l'entité UDM, de données d'inscription de sélection d'une fonction de gestion de session, SMF, pour l'au moins un UE, dans lequel les données d'inscription de sélection SMF comprennent au moins les unes de premières informations indiquant que le service multimodalité est pris en charge pour une tranche de réseau, ou de secondes informations sur un identifiant de groupe de flux de service indiquant un groupe d'UE recevant le service multimodalité ensemble ;
la réception, en provenance de l'au moins un UE, d'un message de demande d'établissement de session d'unité de données de protocole, PDU, comprenant des informations de tranche pour la tranche de réseau ; et
la sélection d'une entité SMF pour l'au moins un UE parmi au moins une entité SMF sur la base des données d'inscription de sélection SMF.

2. Procédé de la revendication 1, dans lequel une même entité SMF est sélectionnée pour au moins une session PDU associée au service multimodalité en tant qu'un autre UE associé au même service multimodalité.

3. Procédé de la revendication 1, dans lequel les informations de tranche comprennent des informations d'assistance de sélection de tranche de réseau unique, S-NSSAI, et un nom de réseau de données, DNN.

4. Procédé de la revendication 1, dans lequel l'emplacement comprend au moins l'une d'une identité de cellule ou d'une identité de zone de suivi, et
dans lequel les informations sur l'entité SMF sélectionnée sont enregistrées auprès d'une entité à fonction de référentiel de réseau, NRF, pour le service multimodalité.

5. Procédé réalisé par une entité de gestion de données unifiée, UDM, dans un système de communication sans fil prenant en charge un service multimodalité, le procédé comprenant :
la réception, en provenance d'une entité à fonction de gestion d'accès et de mobilité, AMF, d'un message de demande d'informations d'inscription pour au moins un équipement utilisateur, UE ; et
la transmission, à l'entité AMF, de données d'inscription de sélection d'une fonction de gestion de session, SMF, pour l'au moins un UE, les données d'inscription de sélection SMF comprenant au moins les unes de premières informations indiquant que le service multimodalité est pris en charge pour une tranche de réseau, ou de secondes informations sur un identifiant de groupe de flux de service indiquant un groupe d'UE recevant le service multimodalité ensemble
dans lequel une session d'unité de données de protocole, PDU, pour l'au moins un UE est établie sur la base d'informations de tranche pour la tranche de réseau, et
dans lequel une entité SMF associée à la session PDU dépend des données d'inscription de sélection SMF.

6. Procédé de la revendication 5, dans lequel une même entité SMF est sélectionnée pour au moins une session PDU associée au service multimodalité en tant qu'un autre UE associé au même service multimodalité, et,
dans lequel les informations de tranche comprennent des informations d'assistance de sélection de tranche de réseau unique, S-NSSAI, et un nom de réseau de données, DNN.

7. Procédé de la revendication 5, dans lequel l'emplacement comprend au moins l'une d'une identité de cellule ou d'une identité de zone de suivi, et
dans lequel les informations sur l'entité SMF sélectionnée sont enregistrées auprès d'une entité à fonction de référentiel de réseau, NRF, pour le service multimodalité.

8. Entité à fonction de gestion d'accès et de mobilité, AMF, dans un système de communication sans fil prenant en charge un service multimodalité, l'entité AMF comprenant :
au moins un processeur ; et
au moins une mémoire, couplée en communication à l'au moins un processeur, stockant des instructions pouvant être exécutées par l'au moins un processeur individuellement ou dans une combinaison quelconque pour amener l'entité AMF à :
transmettre, à une entité de gestion unifiée de données, UDM, un message de demande d'informations d'inscription pour au moins un équipement utilisateur, UE,
recevoir, en provenance de l'entité UDM, des données d'inscription de sélection d'une fonction de gestion de session, SMF, pour l'au moins un UE, dans laquelle les données d'inscription de sélection SMF comprennent au moins les unes de premières informations indiquant qu'un service multimodalité est pris en charge pour une tranche de réseau, ou de secondes informations sur un identifiant de groupe de flux de service indiquant un groupe d'UE recevant le service multimodalité ensemble
recevoir, en provenance de l'au moins un UE, un message de demande d'établissement de session d'unité de données de protocole, PDU, comprenant des informations de tranche pour la tranche de réseau, et
sélectionner une entité SMF pour l'au moins un UE parmi au moins une entité SMF sur la base des données d'inscription de sélection SMF.

9. Entité AMF de la revendication 8, dans laquelle une même entité SMF est sélectionnée pour au moins une session PDU associée au service multimodalité.

10. Entité AMF de la revendication 8, dans laquelle les informations de tranche comprennent des informations d'assistance de sélection de tranche de réseau unique, S-NSSAI, et un nom de réseau de données, DNN.

11. Entité AMF de la revendication 8, dans laquelle l'emplacement comprend au moins l'une d'une identité de cellule ou d'une identité de zone de suivi, et
dans laquelle les informations sur l'entité SMF sélectionnée sont enregistrées auprès d'une entité à fonction de référentiel de réseau, NRF, pour le service multimodalité.

12. Entité de gestion de données unifiée, UDM, dans un système de communication sans fil prenant en charge un service multimodalité, l'entité UDM comprenant :
au moins un processeur ; et
au moins une mémoire, couplée en communication à l'au moins un processeur, stockant des instructions pouvant être exécutées par l'au moins un processeur individuellement ou dans une combinaison quelconque pour amener l'entité UDM à :
recevoir, en provenance d'une entité à fonction de gestion d'accès et de mobilité, AMF, un message de demande d'informations d'inscription pour au moins un équipement utilisateur, UE, et
transmettre, à l'entité AMF, des données d'inscription de sélection d'une fonction de gestion de session, SMF, pour l'au moins un UE, les données d'inscription de sélection SMF comprenant au moins les unes de premières informations indiquant qu'un service multimodalité est pris en charge pour une tranche de réseau, ou de secondes informations sur un identifiant de groupe de flux de service indiquant un groupe d'UE recevant le service multimodalité ensemble,
dans laquelle une session d'unité de données de protocole, PDU, pour l'au moins un UE est établie sur la base des informations de tranche pour la tranche de réseau, et
dans laquelle une entité SMF associée à la session PDU dépend des données d'inscription de sélection SMF.

13. Entité UDM de la revendication 12, dans laquelle une même entité SMF est sélectionnée pour au moins une session PDU associée au service multimodalité en tant qu'un autre UE associé au même service multimodalité.

14. Entité UDM de la revendication 12, dans laquelle les informations de tranche comprennent des informations d'assistance de sélection de tranche de réseau unique, S-NSSAI, et un nom de réseau de données, DNN.

15. Entité UDM de la revendication 12, dans laquelle l'emplacement comprend au moins l'une d'une identité de cellule ou d'une identité de zone de suivi, et
dans laquelle les informations sur l'entité SMF sélectionnée sont enregistrées auprès d'une entité à fonction de référentiel de réseau, NRF, pour le service multimodalité.
